# EUROPEAN PATENT SPECIFICATION

(11) **EP 1 504 826 B1**
(45) Date of publication and mention of the grant of the patent: **31.05.2006**
(21) Application number: 03425541.4
(22) Date of filing: 07.08.2003
(51) Int. Cl.: B09B 3/00, C02F 3/00, B01F 3/04

(54) **Apparatus for the biomass waste aeration and pond based plant comprising the same**
Vorrichtung zur Belüftung biologischer Abfälle und Behandlungsbecken mit einer derartigen Vorrichtung
Appareil pour l'aération de déchets biologiques, et bassin de traitement comprenant cet appareil

(43) Date of publication of application: 09.02.2005
(73) Proprietor: EUKRASIA S.r.l., 42100 Reggio Emilia, RE (IT)
(72) Inventor: Marconi, Walter c/o Emmepi S.r.l., 37026 Settimo di Pescantina VR (IT)
(74) Representative: Leone, Mario

(56) References cited:
- DE-A- 4 315 764
- FR-A- 2 767 818
- US-A- 2 304 772
- US-A- 3 284 058
- US-A- 4 808 305

## Description

The present invention relates to an apparatus for the biomass waste aeration of the kind mechanically crushing and mixing a biomass waste basically made of human and/or animal excrements, semiliquid organic waste, organic waste of industrial origin under composting and the like, to be treated by organic fermentation processes or other similar biological processes.

The scope of the aeration is to comminute the biomass waste in order to oxygenate the organic material under composting.

The present invention further relates to a plant for the treatment and the composting of biomass waste that uses the abovementioned apparatus.

Several kinds of apparatuses for the aeration of biomass waste in composting are known, in particular biomass waste that exhibit a semi-plastic behaviour and are poured in an elongated pond at one end thereof. The scope of the apparatus is to crush the biomass waste with a basically milling action so as to transfer the biomass waste toward the other end of the pond. As the pond is fed and the biomass waste is shifted from one end to the other, the latter is subjected to a translation accompanying its chemico-biological transformation. Thus, the biomass waste reaching the pond end opposite to the feeding end is by then completely treated and ready for subsequent treatments or uses.

The structure of the aeration apparatus can vary considerably depending on the dimensions of the pond, in particular width and depth. A greater width entails a wide processing front that requires an equally wide apparatus or uses a device acting on the biomass waste translating along said front. Moreover, it is understood that the apparatus should work over the entire length of the pond, which may e.g. be of up to 200 m. A known apparatus is disclosed in FR-A-2767818.

The known apparatuses can basically be subdivided into two groups. The first group encompasses apparatuses carrying out a mixing action with blade systems, which generally do not adequately oxygenate the biomass waste, which therefore needs a compensation, e.g. by complex injection systems.

The second group encompasses apparatuses comprising devices with milling rotors, knife rotors etc., which are at least partially immersed in the biomass waste. In the light of the large dimensions of the pond, these rotating members require drive devices, e.g. with gears, chains etc., them also contacting the biomass waste that, understandably, exhibits exceptional corrosive potential and sticking capability and therefore can easily and quickly deteriorate said devices.

The technical problem underlying the present invention is to provide an aeration apparatus for the biomass waste overcoming the drawbacks mentioned with reference to the known art.

Such a problem is solved by an aeration apparatus, apt to be used at an elongated pond for the biomass waste treatment and comprising:
* a first trolley, movable over the length of said pond and arranged transversally to the width of the pond, comprising first drive means for bidirectionally translating said first trolley over the length of said pond;
* a second trolley movable from one end to the other of said first trolley, comprising second drive means for bidirectionally translating said second trolley from one end to the other of said first trolley;
* at least one rotor mounted on said second trolley, whose plane of rotation is basically parallel to the longitudinal axis of the pond, having a diameter such that the periphery of the rotor may act onto the entire depth of the pond; and
* means for rotating said at least one rotor along both senses of rotation, said means for rotating being associated to said second trolley.

The main advantage of the aeration apparatus according to the present invention lies in the options of aerating the entire quantity of biomass waste along the entire front of the pond and over the entire length of the pond, regardless of the dimensions of the latter, and of transferring and treating said biomass waste with the utmost flexibility, on both senses of the pond length.

According to a preferred embodiment, the aeration apparatus according to the invention comprises a control system of the rotation rate of said rotors and of the translation rates of said first and second trolley, capable of varying said rates with regard to the density and to the viscosity of the biomass waste treated, i.e. according to the drag to the rotation of the rotors and to the translation of the second trolley offered by the biomass waste.

The invention further relates to a plant for the biomass waste treatment, comprising:
* at least one elongated pond wherein, at one respective end thereof a quantity of biomass waste is periodically poured, and wherein, at the opposite end thereof, treated biomass waste is recovered; and
* an apparatus for the biomass waste aeration as defined above, capable of working over the full length of said at least one pond.

According to a preferred embodiment of the plant according to the invention, it comprises at least two ponds arranged basically parallel and means for transferring said aeration plant from one pond to the other.

Hereinafter, the present invention will be described according to a preferred embodiment thereof and to some variants, given by way of example and not for limitative purposes with reference to the annexed drawings, wherein:
* Figure 1 is a perspective view of a pond section of a biomass waste treatment plant, with an aeration device according to the invention;
* Figure 2 is a longitudinal sectional view of said pond section and of the aeration apparatus of Figure 1;
* Figure 3 is a cross-sectional view of said pond section and of the aeration apparatus of Figure 1;
* Figure 4 is a top plan view of said pond section and of the apparatus of Figure 1;
* Figure 5 is a schematic top plan view of the entire pond onto which there acts the aeration apparatus of the preceding figures;
* Figure 6 is a perspective view of the member for crushing biomass waste incorporated in the aeration apparatus of Figure 1;
* Figure 7 is a partially sectional front view of the member for crushing biomass waste of Figure 6;
* Figure 8 is a side view of the member for crushing biomass waste of Figure 6; and
* Figure 9 is a perspective view schematically illustrating a plant for the biomass waste treatment comprising a pair of treatment ponds onto which there acts an aeration device according to a variant embodiment of the present invention.

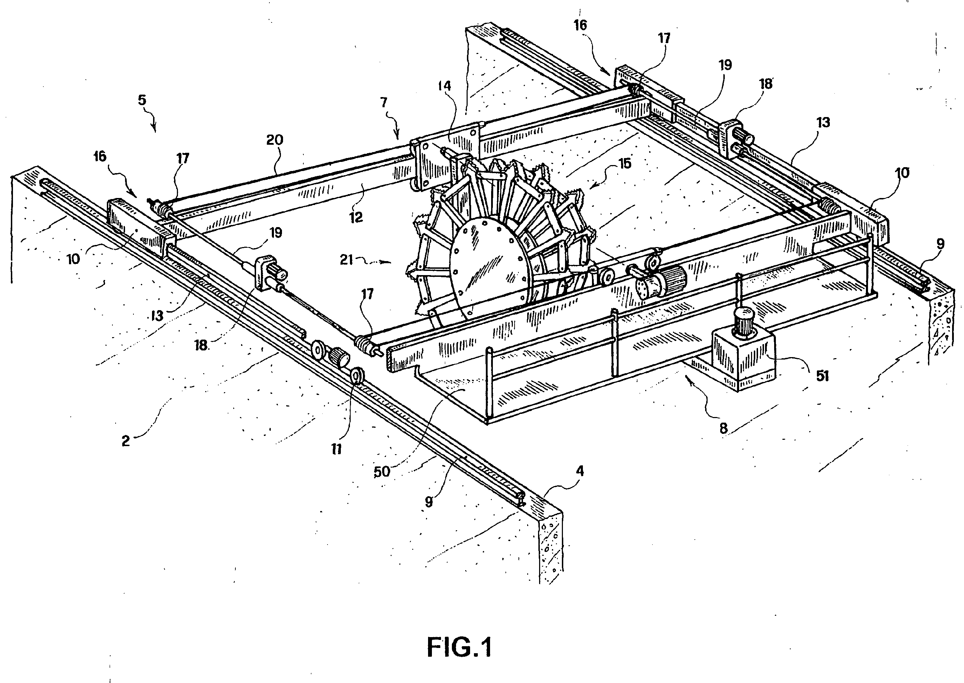

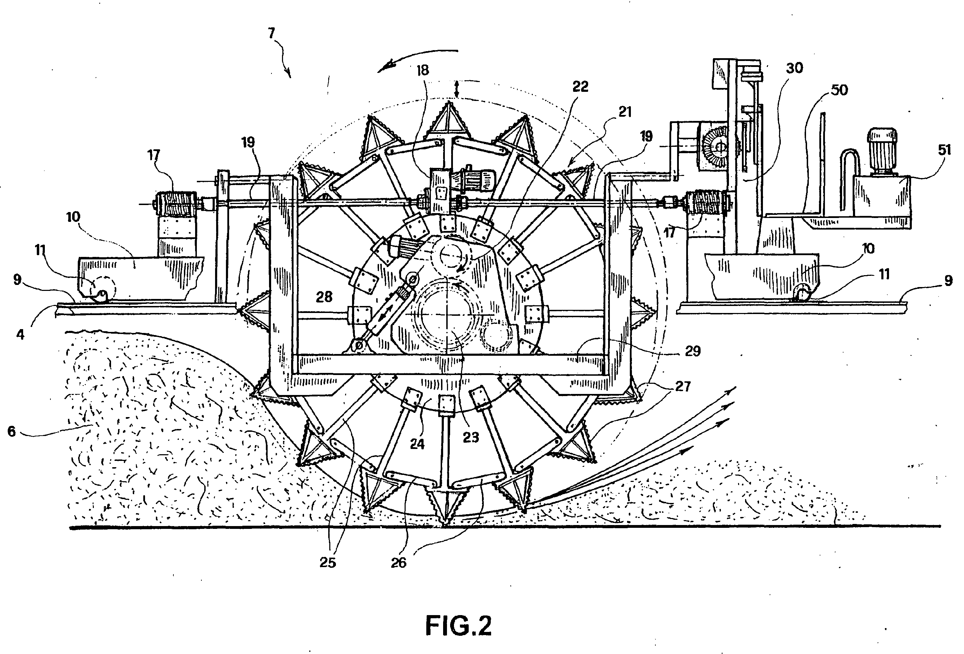

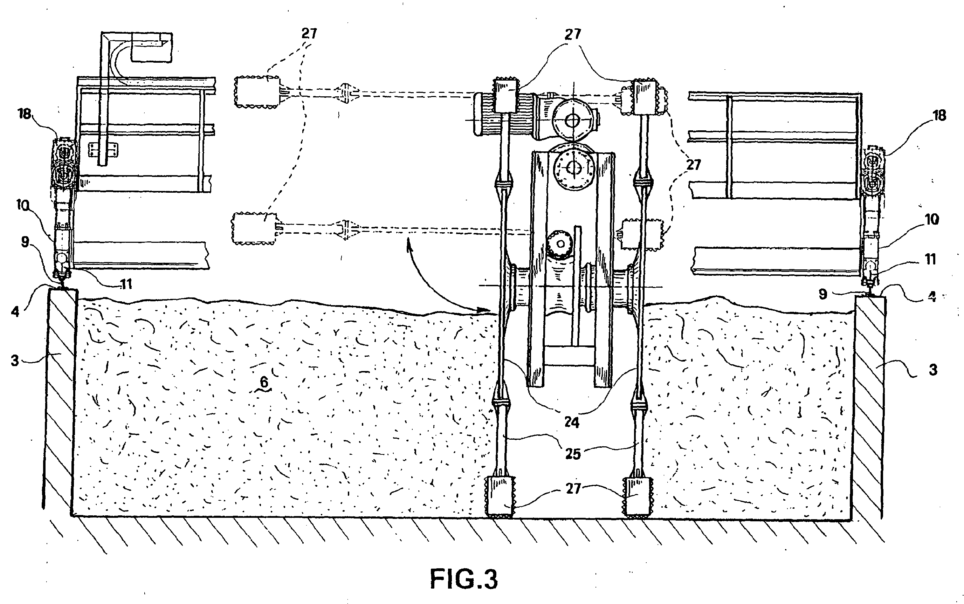

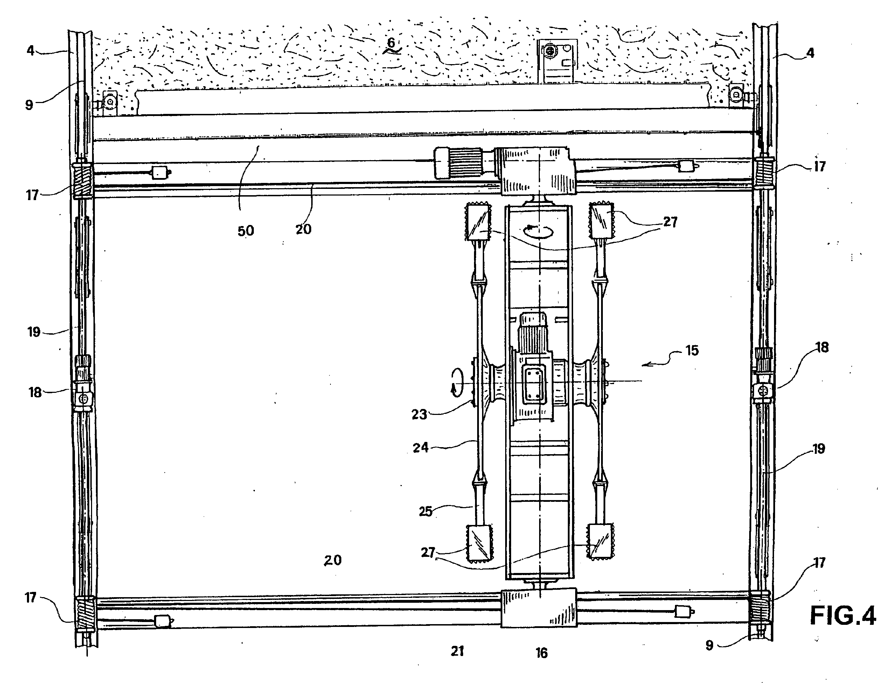

Referring to Figures 1 to 5, in a plant for the biomass waste treatment, a treatment pond or a section thereof depicted by way of example are indicated by 5.

Said pond is of elongated and rectangular shape, with a width that, always by way of example, ranges from 8 to 30 m and a length that ranges, e.g., up to 200 m and beyond. It is defined by side walls 2 and transverse walls 3 of suitable thickness and material, e.g. made of reinforced concrete. Said walls 2 and 3 are vertical, have a height ranging, e.g., up to 2.5 m defining the depth of the pond and have a rectilinear and planar top edge 4.

It is understood that said pond could also be excavated in depth, completely or partially under the ground level.

At a first end 0 of said pond 5 there is discharged or poured, by any suitable means, a quantity 6 of biomass waste forming a heap exhibiting a plastic behaviour. The biomass waste hosts a chemico-biological process of aerobic fermentation and transformation requiring the presence of Oxygen, which may be provided through an aeration. Hereinafter, for 'aeration' it is meant a step of comminuting and in-air dispersing such as to cause an enormous increase of the biomass waste surface directly contacting air and therefore Oxygen.

Said comminuting and in-air dispersing may take place, as in the present embodiment, by in-air crushing that is carried out by impacting a surface layer of biomass waste with mechanical members like e.g. blades, mills, knives, whips, brackets, toothed means. The above impact should occur at adequate rate and inertia so that the crushing may take place regardless of the viscosity and density level of the biomass waste, fostering also the detaching of the latter from said mechanical members.

A side effect of the impact yielding the aeration is that of gradually shifting the biomass waste 6 from the discharge end 0 to an opposite extraction end 1, which will be reached when the biomass waste 6 present therein will already have undergone the abovedescribed chemico-biological transformation.

At said pond 5, the treatment plant comprises the aeration apparatus according to the present embodiment of the invention, generally indicated by 7.

The apparatus 7 is basically crane-bridge-shaped, comprising a first movable trolley 8, arranged transversally to the length of said pond 5. The first trolley 8 rests on a pair of parallel rails 9, each arranged along the top edge 4 of the sidewalls 2 of the pond 5.

For this purpose, the first trolley 8 comprises on each rail 9 a pair of first rotatable supports 10 resting onto the rails 9 with sheaves 11. First beams 12 extend between first rotatable supports 10 corresponding on opposite rails 9, whereas second beams 13 extend between first rotatable supports 10 onto the same rail 9, said beams 12, 13 forming the body of the first trolley 8.

Each first rotatable support 10 is motor-driven. Together, they constitute first drive means for bidirectionally translating said first trolley 8 over the length of said pond 5.

Between one end and the other of the first trolley 8 there extends also a walkway 50 whose access is regulated by suitable gates (not shown) whose opening is detected by a suitable sensor outputting a signal capable of blocking the entire aeration apparatus 7.

At said first beams 12 there are formed respective guides onto which corresponding second rotatable supports 14 rest. Between the latter there extends a support structure constituting a second movable trolley 15 of the aeration apparatus 7, capable of bidirectionally translating along the full length of said first trolley 8 from one end thereof to the other, along the entire transverse front of the pond 5.

To said second trolley 15 there are associated means for bidirectionally translating along the first trolley 8. Said means comprises a pair of winches 16 respectively arranged at the opposing ends of the first trolley 8, i.e. on said second beams 13.

Each winch comprises a pair of drums 17 connected to a respective translation motor 18 by a respective transmission shaft 19. On each drum 17 there is wound a cable 20 connected to the corresponding second rotatable support 14 so that it be connected to a pair of cables 20 respectively tensioned by opposed ends of the first trolley 8.

The translation motors 18 are hydraulic, allowing, as it will be made apparent from the description hereinafter, the translating of the second trolley 15 at a preset and basically constant rate that anyhow can be varied according to the drag offered to the advance of the second trolley 15.

Onto the structure of the second trolley 15 there is arranged a pair of rotors 21, basically disc-shaped and lying on a plane of rotation that is basically parallel to the longitudinal axis of the pond 5, as well as to the direction of motion of the first trolley 8. Such a plane, together with the second trolley 15, translates from one end to the other of the first trolley 8.

The two rotors 21 are specularly arranged, parallel the one to the other. The diameter of each rotor 21 is such that the periphery of the rotor 21 may act onto the entire depth of the pond 5 and hence on the entire biomass waste, regardless of its level inside of the pond 5.

For a depth of 2.0 ÷ 2.5 m, the diameter could be of 4.0 ÷ 4.5 m.

The apparatus 7 comprises means for rotating said rotors 21 according to both viable senses of rotation, with the means for rotating being associated to said second trolley 15 and arranged between the pair of rotors 21 so that it, accompanied by the translation of the second trolley 15, may get to work until near the respective edge of the pond 5.

The sense of rotation given will be counter clockwise to translate the biomass waste left to right and vice versa, so as to let the biomass waste flow under the rotors 21.

Said means for rotating comprises a main hydraulic motor 22, pressure-fed by a suitable pump 51, acting on the hub 23 of the rotor 21.

The pump 51 will contain a ventilated motor delivering an operative liquid, e.g. oil. The control unit 51 is arranged at the gallery, yet it too is associated to the second trolley 15 and translates with the latter.

The rotor 21 consists of an inner disc 24, with a thickness greater in its central region and decreasing towards its periphery, to which there are connected a plurality of radial spokes 25, interconnected at the respective distal ends by connecting bars 26.

Onto each spoke 25 there is mounted a crusher 27 so that the circumferential sequence of the crushers 27 form a rotor periphery capable of crushing, comminuting and hence aerating the biomass waste 6 onto which the rotors 21 are arranged.

The second trolley 15 comprises means for hoisting said rotors 21. For this purpose, the hubs 23 can translate with a limited run with respect to the second trolley 15 to which there is connected a hoisting jack 28. Said means for hoisting are preset to adjust the height of the rotors 21 with respect to the top area of the pond 5, whose bottom presumably is not perfectly plane. In this area, the rotors are arranged at a height such as to graze the bottom of the pond 5, so that, in the other areas, there will be no risk of interference between the periphery of the rotor 21 and the bottom of the pond 5.

The apparatus 7 further comprises means for overturning the rotors 21. For this purpose, the hub 23 is fixed on a rotating bracket 29 rotatably connected to the ends of the second trolley. Said means further comprises an hydraulic drive 30 that, upon receiving a specific signal, overturns the entire second trolley 15, and therefore also the rotors 21 with the related drive means, basically of 90°, arranging the rotors 21 horizontal.

In this configuration the first trolley 8 may quickly be transferred between two different operative positions, e.g. between the extraction end 1 and the charging end 0 once the processing cycle has ended.

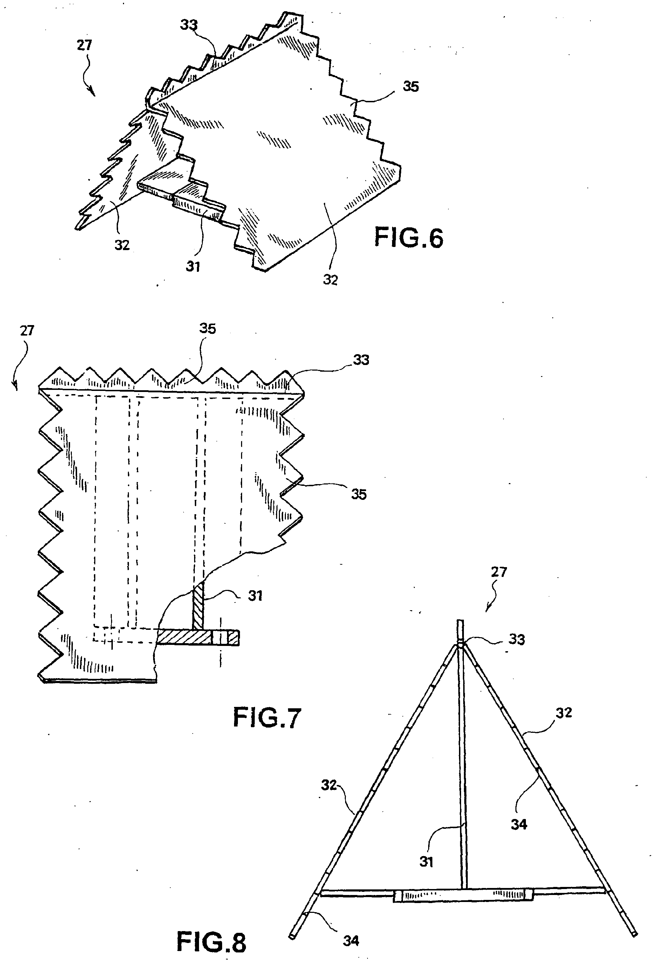

Referring to Figures 6 to 8, said crusher 27 is described. It comprises a support frame 31 onto which there are mounted two rectangular and specular plates 32, joined at an end side 33 constituting the outermost boundary of the respective rotor 21. Between the two plates 32, held in place by the frame 31, there is an angle of about 90°. The end side 33 and the side edges 34 have triangle-shaped teeth 35, with a saw-like contour. The teeth 35 have a height of some centimetres and the thickness of the plates and the material thereof is suitable for contacting highly corrosive biomass waste, with a resistance enabling the crusher 27 to impact the biomass waste 6 with a 10 ÷ 20 m/s rate.

Hence, with the abovedescribed apparatus the biomass waste is processable at variable heights, with the option of improving the thermal effectiveness of the fermentation process. Moreover, there is the option of bidirectionally overturning the biomass waste: the organic mass may be translated from the head 0 of the pond to the outlet 1, as well as vice versa.

Thus, there may be effected a reaccumulation of the material and a recovery of the volumes naturally lost owing to mass shrinkage by evaporation of water from the biomass waste.

Apparently, by virtue of the structure of the apparatus all motion drive members are positioned so as to avoid contacting the treated material, reducing the cleaning and maintenance interventions and hence the downtimes of the machine

By virtue of the presence of a single pair of rotors or anyhow of a limited number thereof, acting over a wide front, there can be reduced the installed power and the tool efforts, loads being equal, via an overturning management minimising the drag opposed by the biomass waste to the motion of the machine itself. Such a management, as it will be made apparent from the description of the work cycle of the apparatus hereinafter, basically enables the handling of small heaps of material at elevated rates, rather than of substantial heaps at reduced rates.

Thus, there is also prevented a heap handling possibly entailing the mixing of material having different maturation levels.

In a simple way, it is possible to adjust the working rate of the apparatus according to the features of the biomass waste, with the option of an automatic adjustment to the changes to such features along the pond.

All parameters useful to the management of the process of aerobic stabilization of the material can, in real time, be detected and inputted in a control system.

A typical plant for the biomass waste treatment may comprise, e.g., three fermentation sheds in which there are installed two aeration apparatuses and a maturation shed in which a single aeration apparatus is installed. Moreover, there will be comprised a roofed storage area for the mature product awaiting subsequent processing.

In the first section of each fermentation pond, inlet side 0 of the fresh product, there is provided a blowing in of air from below the floor in order to foster the triggering of the aerobic process. The air is provided by electric fans, feeding each one manifold from which there branch out a plurality of suitable pipes serving a pond area of suitable extension.

The ends 0, 1 of the fermentation ponds and of the maturation pond are closed by gates, not shown, provided with safety stops; with the opening of even a single gate with the aeration apparatus in motion, voltage is turned off from the general panel, and the plant stops. The gates also prevent the outletting of material during the processing and the rotor-cleaning phase.

At the top of each fermentation shed there is installed a suction manifold for sending the polluted air to a suitable filter.

Daily, and with the aid of a shovel, the operator loads a fermentation pond and extracts from the pond the fermented product processed on the previous day, discharging it in a suitable hopper. The fermented product could be stored in the front area of the maturation shed, and daily the operator will load the maturation pond.

Every two days there should be started the apparatus overturning the biomass waste.

In view of the volume of fermented product being greater than that chargeable in maturation, in order to reset the storing every 10 cycles the aeration apparatus should be operated twice in a row.

At each handling cycle, the mature product is discharged into the hopper provided flush with the floor, automatically extracted and sent in the storage area, awaiting further processing.

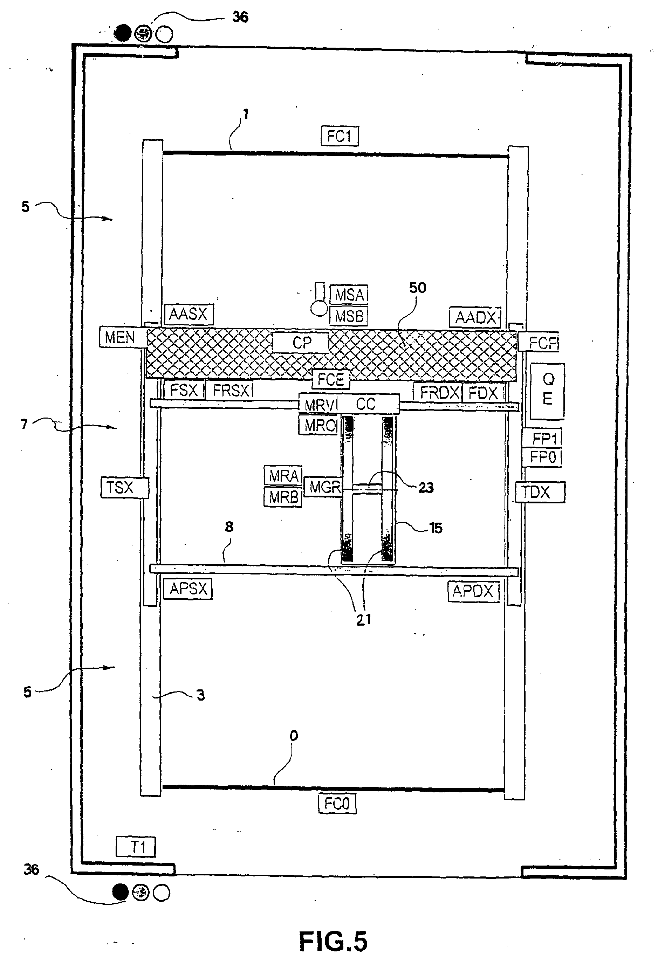

Referring to Figure 5, there are indicated the motors, the control units, the stops and the sensors enabling to control a treatment plant.
- **AASX**: Motor for front left advance of first trolley 8
- **AADX**: Motor for front right advance of second trolley 8
- **APSX**: Motor for rear left advance of first trolley 8
- **APDX**: Motor for rear right advance of first trolley 8
- **CC**: Oil control unit of second trolley 15
- **TSX**: Motor for translation of second trolley 15 to the left
- **TDX**: Motor for translation of second trolley 15 to the right
- **CP**: Oil control unit 51 of gallery 50
- **T1**: Fermentation shed thermostat
- **FP0**: Stop point 0
- **FP1**: Stop point 1
- **FDX**: Stop second rotor-mounting trolley 15 right
- **FSX**: Stop second rotor-mounting trolley 15 left
- **FCE**: Stop second rotor-mounting trolley 15 in a central position for overturning trolley of 90°
- **FRSX**: Stop slowing second trolley 15 left
- **FRDX**: Stop slowing second trolley 15 right
- **FCP**: Safety stop for gate of gallery 50
- **MEN**: Magnetic sensor encoder
- **MRA**: Magnetic sensor rotor 21 top
- **MRB**: Magnetic sensor rotor 21 bottom
- **MRO**: Magnetic sensor rotor 21 horizontal
- **MRV**: Magnetic sensor rotor 21 vertical
- **MGR**: Magnetic sensor rotor 21 revolutions
- **FC0**: Safety stop for gate point 0
- **FC1**: Safety stop for gate point 1

For each aeration apparatus two electric panels are provided: a general panel, housed in the control room and the sole one for all the aeration apparatuses, and a power panel dedicated to each apparatus and mounted aboard the machine. Moreover, in the control room there is located a PC, from which the operator can manage all aeration apparatuses.

Onto the panel aboard the machine there is provided a 4-way selector for setting the apparatus in the automatic, semiautomatic, manual and off modes.

From the PC the operator can select the work sequence of each apparatus, set and display the process data and any anomalies.

There may be provided two work sequences:
1. Forward cycle: processing from point 0 to point 1 and return to point 0.
2. Backward cycle: processing from point 1 to point 0 and return to point 1.

Moreover, the operator can decide, in the two sequences, to deactivate the return.

Onto the operator panel it is possible to set the following parameters:
* Maximum rotation rate of the rotor: the apparatus rotates at maximum rate in the fresh product, just discharged into the pond; the translation rate is adjusted depending on the effort of the rotor.
* Intermediate rotation rate of the rotor: it might be useful to have also this option available, in order to optimally adjust the product-processing phase.
* Minimum rotation rate of the rotor: in order to avoid the formation of dusts, in the dry product the apparatus should rotate at the minimum rate; the translation rate in this case should decrease according to the number of revolutions, and anyhow it is always adjusted depending on the effort of the rotor.

It is understood that the translation rate of the second trolley should automatically vary with the varying of the rotation rate.
* Advance time of the apparatus, i.e., given a certain advance rate of the first trolley, thickness of biomass waste subjected to the milling during a translation of the second trolley.
* Number of advances or distance prior to the initial increase in the rotor rotation rate.
* Number of advances or distance prior to the second increase in the rotor rotation rate.
* Cleaning time of the rotor at the end of the processing.
* Rate of nearing to the stops FSX and FDX during translation. The rate should decrease (from the intervention of FRSX and FRDX) to avoid the inertia of the trolley.
* Operation time of the fans for blowing air in the pond.
* Operation time of the aspirator for extracting air from the shed.
* Moreover, on the PC there are displayed the following process data:
* Cycle under way: indicates whether the plant is automatically operating and which work sequence has been selected.
* Cycle state: ACTIVE - when operating normally, without alarms and interruptions; STOPPED - when stopped by the manager, when the selector on the panel aboard the machine is on manual or when it has completed the work cycle; ALARM - when any anomaly occurred in operation.
* Biomass temperature detection: ON/OFF
* Last time of pond processing.
* Rotor rotation rate.
* Trolley translation rate, a data provided by the inverter, compared with that computed by the FSX and FDX. Thus, it is checked whether the inverter is operating correctly and the stops are operating.
* Trolley slowing rate after energizing of the stops FRSX and FRDX to reduce the inertia due to the translation rate.
* Position of the apparatus along the pond.
* Concerning the manual controls, by acting on suitable push buttons provided on the panel aboard the machine it is possible to carry out all the operation steps, with the following restrictions:
* It is not possible to operate the ROTOFAC when even one of the gates of the pond or of the gallery is open (intervention of the safety stops FC0, FC1 and FCP).
* It is not possible to overturn the rotor when the stop FCE is de-energized.
* It is not possible to overturn the rotor when it is rotating.
* It is not possible to advance the ROTOFAC when the magnetic sensor MSA is de-energized.

Onto the panel aboard the machine there is provided a cycle selector in semi-automatic mode. Putting the plant in such a mode, the operator is allowed merely to advance the aeration apparatus for the time set, so as to discharge the fermented product from the pond. Upon ending the discharging step, acting on the appropriate push button the operator returns the machine to point 0 and sets the plant selector to the automatic mode.

Concerning the automatic cycle, upon having carried out the steps related to the semi-automatic cycle, and having set the selector of the panel aboard the machine in automatic mode position, from the general panel, the following steps take place in a sequence:
1) The operator should select the work sequence, e.g.: forward cycle - return ON.
2) The operator should select whether to activate or not the detection of the biomass waste temperature.
3) The operator presses the processing cycle start key; when the selector onto the panel aboard the machine is in automatic mode and no alarm is present, after an acoustic signalling the processing cycle starts.
4) At the start of the automatic cycle the rotor arranges itself vertically (magnetic sensor MRV energized).
5) The trolley shifts to the left (stop FSX energized). At the stop FRSX the translation rate drops as per preset value.
6) The rotor is started and, after the time required to reach the steady state rotation rate, detected by the magnetic sensor MGR, the rotor is lowered (magnetic sensor MRB energized) into a work position.
7) Advance of the apparatus at the minimum rate for the set time or distance.
8) Translation of the second rotor bearing trolley 15 with product processing to energized stop FDX. At FRDX the translation rate drops as per preset value.
9) With the trolley translation start, there is lowered the probe for measuring the biomass waste temperature. At the energizing of the stop FDX, the probe is lifted and with the consent of the magnetic sensor MSA the apparatus advances, the probe is reinserted in the material and the leftwise processing of the biomass resumes. Each advance could be of 25 ÷ 50 cm.
10) End of processing (FP1 stop energized): the rotor lifts (magnetic sensor MRA energized).
11) After the set cleaning time, the rotor 21 stops and after the time required for the stopping it shifts to a central position (stop FCE energized).
12) The rotor arranges in a horizontal position (magnetic sensor MRO energized).
13) With MRO energized, the apparatus returns to maximum rate at point 0.
14) With the energizing of the stop FP0, the cycle ends and the apparatus stops.

With regard to the number of advances, it is possible to know the position of the apparatus in the pond with a good approximation.

Outside of the fermentation shed, at the access gates provided onto the two end sides, there are positioned three lamps 36, so as to enable the operator to display the state of the process with no need to get in the shed.

The three lamps have the colours green, yellow, red; their specific meaning is described herebelow:
Green lamp: Plant stopped.
Yellow lamp: Plant operating.
Red lamp: Plant alarm.

Identical signals should be provided on the general control panel.

The apparatus provides further adjustment options. In particular, the hydraulic drives could be equipped with sensors for detecting the in-circuit pressure, which will vary according to the drag offered by the biomass waste to the rotation and to the sideways translation of the rotor. At the increase of the drag the pressure will increase and it will be possible to increase or to decrease the power supply in response to this signal.

In particular, it is possible to slow down the translation rate of the rotors 21 according to the drag offered by the biomass waste, lengthening or shortening the processing times.

Furthermore, it is possible to arrange one or more ultrasound sensors to detect, along the processing course of the rotor-mounting trolley and of the first trolley, the height of the biomass waste and to accordingly adjust the kind of adjustment. All this can be controlled by a suitable software.

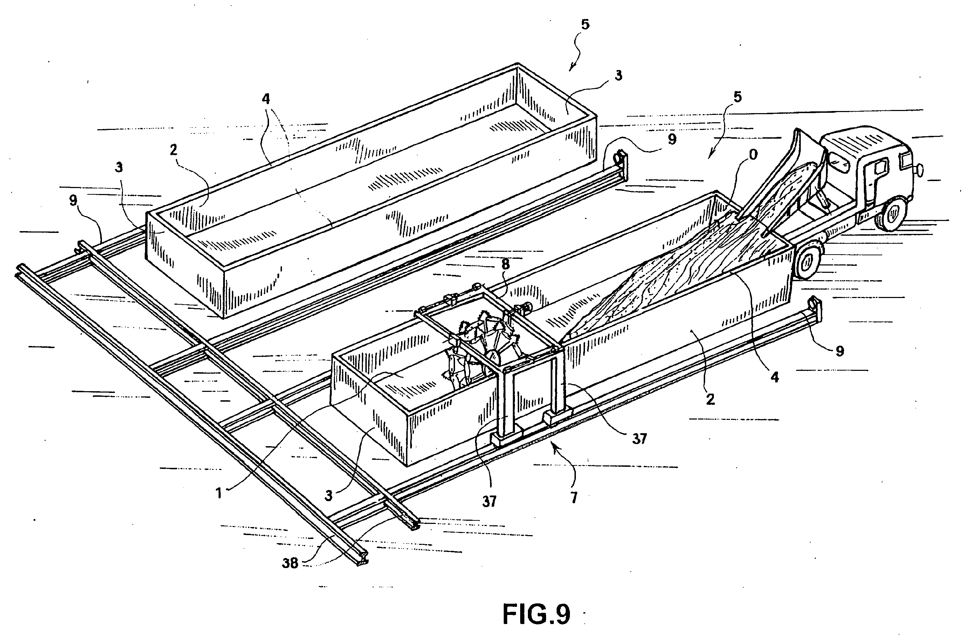

Referring to Figure 9, a treatment plant variant is described. In it, the rails 9 are arranged flush with the ground rather than on the top edges 4 of the ponds 5. Thus, the first trolley 8 is supported by pillars 37 and it has a bridge-like configuration.

Thus, the rails of side-by-side ponds could easily be served by the same aeration apparatus that will be equipped with ancillary wheels (not shown). At one of the ends of the first pond 5, by virtue of points, not shown, and of ancillary transverse rails 38, it will be possible to translate the apparatus 7 onto the adjacent pond.

To the abovedescribed aeration apparatus and plant for the biomass waste treatment a person skilled in the art, in order to satisfy further and contingent needs, may effect several further modifications and variants, all however encompassed within the protective scope of the present invention, as defined by the appended claims.

## Claims

1. An aeration apparatus (7), apt to be used at an elongated pond (5) for the biomass waste treatment or the like, comprising:
* a first trolley (8) movable over the length of said pond (5) and arranged transversally to the width of the pond (5), comprising first drive means (AASX, AADX, APSX, APDX) for bidirectionally translating said first trolley (8) over the length of said pond (5);
* a second trolley (15) movable from one end to the other of said first trolley (8), comprising second drive means (TSX, TDX, 17, 18, 19, 20) for bidirectionally translating said second trolley (15) from one end to the other of said first trolley (8);
* at least one rotor (21) mounted on said second trolley (15), whose plane of rotation is basically parallel to the longitudinal axis of the pond (5), having a diameter such that the periphery of the rotor (21) may act onto the entire depth of the pond (5); and
* means (51) for rotating said at least one rotor (21) along both senses of rotation, said means for rotating (51) being associated to said second trolley (15).

2. The apparatus (7) according to claim 1, comprising a control system of the rotation rate of said rotors (21) and of the translation rates of said first and second trolley (8, 15), capable of varying said rates with regard to the density and to the viscosity of the biomass waste treated, i.e. according to the drag to the rotation of the rotors (21) and to the translation of the second trolley (15) offered by the biomass.

3. The apparatus (7) according to claim 1 or 2, wherein the first trolley (8) is basically bridge crane-shaped resting on a pair of rails (9).

4. The apparatus (7) according to claim 3, wherein the first trolley (8) comprises, on each rail (9), a pair of first rotatable supports (10) equipped with a respective motor (AASX, AADX, APSX, APDX).

5. The apparatus (7) according to one of the preceding claims, wherein between one end and the other of the first trolley (8) there extends also a gallery (50) whose access is regulated by suitable gates.

6. The apparatus (7) according to one of the preceding claims, wherein said means for bidirectionally translating along the first trolley (8) comprises a pair of winches (16), each winch (16) comprises a pair of drums (17), connected to a respective motor (18), onto which there is wound a cable (20) connected to a corresponding second rotatable support (14) of the second trolley (15), the respective motor (18) being hydraulic, allowing the translating of the second trolley (15) at a preset rate that can be varied according to the drag offered to the advance of the second trolley (15).

7. The apparatus (7) according to any one of the preceding claims, wherein said at least one rotor (21) is a pair of rotors (21) specularly arranged, parallel the one to the other, and the means for rotating said rotors (21) are arranged between the pair of rotors (21).

8. The apparatus (7) according to any one of the preceding claims, wherein said means for rotating comprises a main hydraulic motor (22), pressure-fed by a suitable pump 51, acting on the hub (23) of said at least one rotor (21), the pump (51) being it also associated to the second trolley (15) to translate with the latter.

9. The apparatus according to claim 7, wherein the rotor (21) consists of an inner disc (24) to which there are connected a plurality of radial spokes (25), interconnected at the respective distal ends by connecting bars (26), on each spoke (25) there being mounted a crusher (27) so that the circumferential sequence of the crushers (27) form a rotor periphery capable of crushing, comminuting and hence aerating a biomass waste (6).

10. The apparatus (7) according to claim 9, wherein said crusher (27) comprises a support frame (31) onto which there are mounted two rectangular and specular plates (32), joined at an end side (33) constituting the outermost boundary of the respective rotor (21), said end side (33) and the side edges (34) having teeth (35) with a saw-like contour.

11. The apparatus (7) according to claim 7, wherein said second trolley (15) comprises means for hoisting said rotors (21) comprising at least one lifting jack (28).

12. The apparatus (7) according to any one of the preceding claims, which further comprises means for overturning said at least one rotor (21).

13. The apparatus (7) according to claim 12, wherein the hub (23) of said at least one rotor (21) is fixed on a rotating bracket (29) rotatably connected to the ends of the second trolley (15), and said means further comprises a hydraulic drive (30) that can overturn the entire second trolley (15) basically of 90°, arranging the at least one rotor (21) horizontal.

14. A plant for the biomass waste treatment, comprising:
* at least one elongated pond (5) wherein, at one respective end (0) thereof, a quantity of biomass waste (6) is periodically poured and wherein, at the opposite end (1) thereof, treated biomass waste is recovered; and
* an apparatus (7) for the aeration of biomass waste as defined in one of the preceding claims, capable of working over the full length of said at least one pond (5).

15. The plant according to claim 14, comprising at least two ponds arranged basically parallel and means for transferring said aeration plant (7) from one pond to the other (5).

## Patentansprüche

1. Belüftungsvorrichtung (7), die sich zum Einsatz an einem länglichen Becken (5) für die Biomasse-Abfallbehandlung oder dergleichen eignet, wobei sie umfasst:
einen ersten Laufwagen (8), der über die Länge des Beckens (5) bewegt werden kann und quer zur Breite des Beckens (5) angeordnet ist und eine erste Antriebseinrichtung (AASX, AADX, APSX, APDX) umfasst, die den ersten Laufwagen (8) in zwei Richtungen über die Länge des Beckens (5) verschiebt;
einen zweiten Laufwagen (15), der von einem Ende zum anderen Ende des ersten Laufwagens (8) bewegt werden kann und eine zweite Antriebseinrichtung (TSX, TDX, 17, 18, 19, 20) umfasst, die den zweiten Laufwagen (15) in zwei Richtungen von einem Ende zum anderen Ende des ersten Laufwagens (8) verschiebt;
wenigstens einen Rotor (21), der an dem zweiten Laufwagen (15) angebracht ist und dessen Drehebene im Wesentlichen parallel zu der Längsachse des Beckens (5) ist und der einen Durchmesser hat, durch den der Umfang des Rotors (21) auf die gesamte Tiefe des Beckens (5) einwirken kann; und
eine Einrichtung (51), die den wenigstens einen Rotor (21) in beiden Drehrichtungen dreht, wobei die Einrichtung (51) zum Drehen mit dem zweiten Laufwagen (15) verbunden ist.

2. Vorrichtung (7) nach Anspruch 1, die ein System zum Steuern der Drehgeschwindigkeit der Rotoren (21) und der Verschiebegeschwindigkeiten des ersten sowie des zweiten Laufwagens (8, 15) umfasst, das in der Lage ist, die Geschwindigkeiten unter Berücksichtigung der Dichte und der Viskosität des behandelten Biomasseabfalls zu ändern, d. h. entsprechend dem Widerstand gegenüber der Drehung der Rotoren (21) und der Verschiebung des zweiten Laufwagens (15), den die Biomasse ausübt.

3. Vorrichtung (7) nach Anspruch 1 oder 2, wobei der erste Laufwagen (8) im Wesentlichen die Form eines Brückenkrans hat und auf einem Paar Schienen (9) aufsitzt.

4. Vorrichtung (7) nach Anspruch 3, wobei der erste Laufwagen (8) an jeder Schiene (9) ein Paar erster drehbarer Träger (10) umfasst, die mit einem entsprechenden Motor (AASX, AADX, APSX, APDX) ausgestattet sind.

5. Vorrichtung (7) nach einem der vorangehenden Ansprüche, wobei sich zwischen einem Ende und dem anderen Ende des ersten Laufwagens (8) des Weiteren ein Laufgang (50) erstreckt, dessen Zugang durch geeignete Gatter geregelt wird.

6. Vorrichtung (7) nach einem der vorangehenden Ansprüche, wobei die Einrichtung, die den ersten Laufwagen (8) in zwei Richtungen verschiebt, ein Paar Winden (16) umfasst und jede Winde (16) ein Paar Trommeln (17) umfasst, die mit einem jeweiligen Motor (18) verbunden sind und auf die ein Seil (20) aufwickelt ist, das mit einem entsprechenden zweiten drehbaren Träger (14) des zweiten Laufwagens (15) verbunden ist, wobei der jeweilige Motor (18) hydraulisch ist und die Verschiebung des zweiten Laufwagens (15) mit einer voreingestellten Geschwindigkeit ermöglicht, die entsprechend dem der Vorwärtsbewegung des zweiten Laufwagens (15) entgegengesetzten Widerstand geändert werden kann.

7. Vorrichtung (7) nach einem der vorangehenden Ansprüche, wobei der wenigstens eine Rotor (21) aus paarigen Rotoren (21) besteht, die spiegelbildlich parallel zueinander angeordnet sind, und die Einrichtung zum Drehen der Rotoren (21) zwischen den paarigen Rotoren (21) angeordnet ist.

8. Vorrichtung (7) nach einem der vorangehenden Ansprüche, wobei die Einrichtung zum Drehen einen Haupt-Hydraulikmotor (22) umfasst, der von einer geeigneten Pumpe (51) mit Druck gespeist wird und auf die Nabe (23) des wenigstens einen Rotors (21) wirkt, wobei die Pumpe (51) ebenfalls mit dem zweiten Laufwagen (15) verbunden ist, um letzteren zu verschieben.

9. Vorrichtung (7) nach Anspruch 7, wobei der Rotor (21) aus einer inneren Scheibe (24) besteht, mit der eine Vielzahl radialer Speichen (25) verbunden sind, die an den jeweiligen vorderen Enden durch Verbindungsstangen (26) miteinander verbunden sind, und an jeder Speiche (25) ein Brecher (27) angebracht ist, so dass die Abfolge der Brecher (27) in Umfangsrichtung einen Rotorumfang bildet, der in der Lage ist, eine Biomasse (6) zu brechen, zu zerkleinern und damit zu belüften.

10. Vorrichtung (7) nach Anspruch 9, wobei der Brecher (27) einen Tragerahmen (31) umfasst, an dem zwei rechteckige spiegelbildliche Platten (32) angebracht sind, die an einer Endseite (33) verbunden sind, die die äußerste Grenze des jeweiligen Rotors (21) bildet, wobei die Endseite (33) und die seitlichen Kanten (34) Zähne (35) mit einer sägeartigen Kontur haben.

11. Vorrichtung (7) nach Anspruch 7, wobei der zweite Laufwagen (15) eine Einrichtung zum Anheben der Rotoren (21) umfasst, die wenigstens einen Heber (28) umfasst.

12. Vorrichtung (7) nach einem der vorangehenden Ansprüche, die des Weiteren eine Einrichtung zum Kippen des wenigstens einen Rotors (21) umfasst.

13. Vorrichtung (7) nach Anspruch 12, wobei die Nabe (23) des wenigstens einen Rotors (21) an einem sich drehenden Träger (29) befestigt ist, der drehbar mit den Enden des zweiten Laufwagens (15) verbunden ist, und die Einrichtung des Weiteren einen Hydraulikantrieb (30) umfasst, der den gesamten zweiten Laufwagen (15) um im Wesentlichen 90° kippen kann, so dass der wenigstens eine Rotor (21) horizontal angeordnet ist.

14. Anlage zur Behandlung von Biomasseabfall, die umfasst:
wenigstens ein längliches Becken (5), in das an einem jeweiligen Ende (0) desselben periodisch eine Menge an Biomasseabfall (6) geschüttet wird, und wobei am gegenüberliegenden Ende (1) desselben behandelte Biomasse zurückgewonnen wird; und
eine Vorrichtung (7) zur Belüftung von Biomasseabfall nach einem der vorangehenden Ansprüche, die in der Lage ist, über die gesamte Länge des wenigstens einen Beckens (5) zu arbeiten.

15. Anlage nach Anspruch 14, die wenigstens zwei Becken, die im Wesentlichen parallel angeordnet sind, sowie eine Einrichtung zum Überführen der Belüftungsanlage (7) von einem Becken zum anderen (5) umfasst.

## Revendications

1. Appareil pour l'aération (7) apte à être utilisé dans un bassin allongé (5) pour le traitement de déchets de biomasse ou analogues, comprenant :
- un premier chariot (8) mobile sur la longueur dudit bassin (5) et agencé transversalement à la largeur du bassin (5), comprenant un premier moyen d'entraînement (AASX, AADX, APSX, APDX) pour une translation bidirectionnelle dudit premier chariot (8) sur la longueur dudit bassin (5) ;
- un deuxième chariot (15) mobile d'une extrémité à l'autre dudit premier chariot (8) comprenant des deuxièmes moyens d'entraînement (TSX, TDX, 17, 18, 19, 20) pour la translation bidirectionnelle dudit deuxième chariot (15) d'une extrémité à l'autre dudit premier chariot (8) ;
- au moins un rotor (21) monté sur ledit deuxième chariot (15) dont le plan de rotation est dans l'ensemble parallèle à l'axe longitudinal du bassin (5) ayant un diamètre tel que la périphérie du rotor (21) peut agir sur l'entière profondeur du bassin (5) ; et
- des moyens (51) pour faire tourner ledit au moins un rotor (21) le long des deux sens de rotation, lesdits moyens pour la rotation (51) étant associés audit deuxième chariot (15).

2. Appareil (7) selon la revendication 1, comprenant un système de commande de la vitesse de rotation desdits rotors (21) et des vitesses de translation desdits premier et deuxième chariots (8, 15) capable de faire varier lesdites vitesses eu égard à la densité et à la viscosité des déchets de biomasse traités, c'est-à-dire conformément au tirage à la rotation des rotors (21) et à la translation du deuxième chariot (15) procurés par la biomasse.

3. Appareil (7) selon la revendication 1 ou 2, dans lequel le premier chariot (8) est dans l'ensemble un pont reposant sur une paire de rails (9).

4. Appareil (7) selon la revendication 3, dans lequel le premier chariot (8) comprend sur chaque rail (9) une paire de premiers supports rotatifs (10) munis d'un moteur respectif (AASX, AADX, APSX, APDX).

5. Appareil (7) selon l'une des revendications précédentes, dans lequel entre une extrémité et l'autre du premier chariot (8), il y a également une galerie (50) dont l'accès est réglé par des portes appropriées.

6. Appareil (7) selon l'une des revendications précédentes, dans lequel ledit moyen de translation bidirectionnelle le long du premier chariot (8) comprend une paire de treuils (16), chaque treuil (16) comprenant une paire de tambours (17) reliée à un moteur respectif (18) sur lequel est enroulé un câble (20) relié à un deuxième support rotatif correspondant (14) du deuxième chariot (15), le moteur respectif (18) étant hydraulique, permettant la translation du deuxième chariot (15) à une vitesse préétablie qui peut varier conformément au tirage fourni à l'avance du deuxième chariot (15).

7. Appareil (7) selon l'une quelconque des revendications précédentes, dans lequel ledit au moins un rotor (21) est une paire de rotors (21) agencés de façon spéculaire, parallèles l'un à l'autre, et les moyens pour faire tourner lesdits rotors (21) sont agencés entre la paire de rotors (21).

8. Appareil (7) selon l'une quelconque des revendications précédentes, dans lequel lesdits moyens pour la rotation comportent un moteur hydraulique principal (22) alimenté en pression par une pompe appropriée (51) agissant sur le moyeu (23) dudit au moins un rotor (21), la pompe (51) étant également associée au deuxième chariot (15) pour la translation avec celui-ci.

9. Appareil selon la revendication 7, dans lequel le rotor (21) comprend un disque intérieur (24) auquel sont reliés plusieurs rayons radiaux (25) reliés entre eux aux extrémités distales respectives par des barres de liaison (26), sur chaque rayon (25) est monté un dispositif de broyage (27) afin que la séquence circonférentielle des dispositifs de broyage (27) forme une périphérie de rotor capable de broyer, de réduire en particules et, par conséquent, d'aérer un déchet de biomasse (6).

10. Appareil (7) selon la revendication 9, dans lequel ledit dispositif de broyage (27) comprend un cadre de support (31) sur lequel sont montées deux plaques rectangulaires et spéculaires (32) réunies sur un côté d'extrémité (33) constituant la délimitation extérieure du rotor respectif (21), ledit côté d'extrémité (33) et les bords latéraux (34) ayant des dents (35) avec un contour en forme de scie.

11. Appareil (7) selon la revendication 7, dans lequel ledit deuxième chariot (15) comprend des moyens pour lever lesdits rotors (21) comprenant au moins un vérin élévateur (28).

12. Appareil (7) selon l'une quelconque des revendications précédentes, qui comprend, de plus, des moyens pour retourner ledit au moins un rotor (21).

13. Appareil (7) selon la revendication 12, dans lequel le moyeu (23) dudit au moins un rotor (21) est fixé sur une console rotative (29) reliée de façon rotative aux extrémités du deuxième chariot (15) et lesdits moyens comportent, de plus, une commande hydraulique (30) qui peut retourner tout le deuxième chariot (15) dans l'ensemble de 90°, agençant le au moins un rotor (21) horizontal.

14. Installation pour le traitement de déchets de biomasse, comprenant :
- au moins un bassin allongé (5) dans lequel, à une extrémité respective (0) de celui-ci, une quantité de déchets de biomasse (6) est versée de façon périodique et dans lequel, sur l'extrémité opposée (1) de celui-ci, les déchets de biomasse traités sont récupérés ; et
- un appareil (7) pour l'aération des déchets de biomasse selon l'une des revendications précédentes, capable de travailler sur toute la longueur dudit au moins un bassin (5).

15. Installation selon la revendication 14, comprenant au moins deux bassins agencés fondamentalement parallèlement et des moyens pour transférer ladite installation d'aération (7) d'un bassin à l'autre (5).
